# EUROPÄISCHE PATENTSCHRIFT

(11) **EP 4 441 390 B1**
(45) Veröffentlichungstag und Bekanntmachung des Hinweises auf die Patenterteilung: **03.06.2026**
(21) Anmeldenummer: 22818695.3
(22) Anmeldetag: 18.11.2022
(51) Int. Cl.: F16G 13/16, H02G 11/00

(54) **KETTENGLIED EINER LEITUNGSFÜHRUNGSEINRICHTUNG MIT ZUGENTLASTUNG**
CHAIN LINK OF A CABLE GUIDE DEVICE WITH STRAIN RELIEF
MAILLON DE CHAÎNE D'UN DISPOSITIF DE GUIDAGE DE CÂBLE AVEC RÉDUCTION DE TENSION

(30) Priorität: 29.11.2021 DE 102021131273
(43) Veröffentlichungstag der Anmeldung: 09.10.2024
(73) Patentinhaber: Tsubaki Kabelschlepp GmbH, 57482 Wenden-Gerlingen (DE)
(72) Erfinder: KEMPER, Uwe, 57223 Kreuztal (DE)
(74) Vertreter: Neumann, Ditmar
(86) Internationale Anmeldenummer: PCT/EP2022/082380
(87) Internationale Veröffentlichungsnummer: WO 2023/094270

(56) Entgegenhaltungen:
- DE-A1- 10 002 782

## Beschreibung

Die Erfindung betrifft ein Kettenglied einer Leitungsführungseinrichtung, in der eine Zugentlastungseinheit integriert ist und eine Leitungsführungseinrichtung.

Leitungsführungseinrichtungen zum Führen von Leitungen oder Schläuchen zwischen zwei relativ zueinander beweglichen Anschlusspunkten sind aus dem Stand der Technik bekannt. Anwendung finden diese etwa bei Maschinen mit beweglichen Elementen, die mit Energie oder Medien versorgt werden müssen. Unter dem Begriff "Leitung" werden insbesondere Kabel, Schläuche und Drähte zusammengefasst.

Eine Leitungsführungseinrichtung umfasst eine Mehrzahl von gelenkig miteinander verbundenen Kettengliedern, innerhalb derer Leitungen geschützt geführt werden können. Ein Kettenglied kann durch zwei sich gegenüberliegende Seitenlaschen und einen die Seitenlaschen verbindenden Quersteg gebildet sein.

Mit einer Relativbewegung zwischen den zwei zu verbindenden Anschlusspunkten sind oftmals auch auf die Leitungen wirkende Zugkräfte verbunden. Solche Belastungen verkürzen die Lebensdauer der Leitungen und stellen zudem ein Risiko für die Betriebssicherheit dar. Um diese aufzunehmen, sind verschiedene Zugentlastungskonzepte bekannt.

Aus der WO 95/28582 ist ein Befestigungselement bekannt, das die Integration von Zugentlastungselementen in Kettenglieder von Leitungsführungseinrichtungen ermöglicht. Dabei ist ein vergleichsweise hoher apparativer Aufwand erforderlich. Die Befestigungselemente werden dabei individuell angefertigt und müssen aufgrund der wirkenden Kräfte massiv ausgebildet sein. Da die wirkenden Kräfte in das Befestigungselement eingeleitet werden, ist dessen Festigkeit mitbestimmend für die Betriebs- und Ausfallsicherheit der gesamten Leitungsführungseinrichtung.

Durch die Druckschrift DE 100 02 782 A1 ist eine Klemmvorrichtung für eine Zugentlastung dynamisch beanspruchter Leitungen in einer Energieführungskette mit einem Schaft, der quer zur Kettenlängsrichtung ausgerichtet ist und innerhalb eines Kettengliedes befestigt ist. Eine obere Quertraverse stütz unter Formschlussausbildungen das freie Ende des Schaftes ab.

Der Erfindung liegt die Aufgabe zugrunde, die aus dem Stand der Technik bekannten Probleme zumindest teilweise zu überwinden und insbesondere ein Kettenglied bereitzustellen, in dem auf die Leitungen oder Schläuche wirkenden Zugkräfte minimiert werden, indem sie anderweitig aufgenommen werden. Diese Aufgabe wird gelöst durch die Merkmale der unabhängigen Ansprüche. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die Erfindung betrifft ein Kettenglied mit einer integrierten Zugentlastungseinheit, die universell einsetzbar ist. Dabei werden Kräfte und Momente, die auf die Leitungen und die Leitungsführungseinrichtung wirken, von einer Befestigungseinheit und mindestens einem Widerlager aufgenommen. Da Belastungen durch Zugkräfte und Torsionsmomente in vorteilhafter Weise an mehreren Punkten in Komponenten des Kettengliedes eingeleitet werden, ist es möglich, auch mehrere Leitungen übereinander in einer Leitungsführungseinrichtung zu führen. Mit dem erfindungsgemäßen Kettenglied mit integrierter Zugentlastungseinheit kann bei geringem apparativem Aufwand den Belastungen standgehalten und vorzeitiger Materialermüdung vorgebeugt werden. Durch die Erfindung kann zudem eine Erhöhung der Betriebs- und Ausfallsicherheit erreicht werden, da Lasten auf mehrere Elemente abgeleitet werden.

Es wird ein Kettenglied einer Leitungsführungseinrichtung vorgeschlagen. Die Leitungsführungseinrichtung kann insbesondere zum Führen von Leitungen oder Schläuchen zwischen zwei relativ zueinander beweglichen Anschlusspunkten vorgesehen sein. Das Kettenglied weist zwei parallele Seitenlaschen und eine im Kettenglied integrierte Zugentlastungseinheit auf. Jede Seitenlasche weist einen ersten und einen zweiten Längsrand auf. Ein Längsrand erstreckt sich in Richtung der größten Ausdehnung eines Seitenteils. In dieser Richtung verlaufen auch die Leitungen innerhalb der Leitungsführungseinrichtung.

Die Zugentlastungseinheit umfasst ein Befestigungselement und ein Zugentlastungelement. Das Befestigungselement kann beispielsweise in Form einer Schiene ausgebildet sein, die in Querrichtung zwischen den Seitenteilen vorgesehen ist. Unter der Querrichtung des Kettengliedes wird insbesondere die Richtung von einem zum anderen Seitenteil orthogonal zu den zu führenden Leitungen verstanden. Das Befestigungselement ist mit einem Zugentlastungselement verbindbar. Die Verbindung erfolgt in einem ersten von zwei Endbereichen des Zugentlastungselements. Das Zugentlastungselement kann beispielsweise das Befestigungselement umgreifen oder in es eingeschoben werden. Der erste Endbereich des Zugentlastungselements und das Befestigungselement sind vorteilhafterweise geometrisch aufeinander abgestimmt.

Das Zugentlastungelement kann einen Hohlkörper umfassen, der in Längsrichtung der Kettenglieder offen ist. Leitungen lassen sich durch den Hohlkörper hindurchführen.

An mindestens einer Seitenlasche ist mindestens ein Widerlager vorgesehen, das sich in Richtung der jeweils anderen Seitenlasche erstreckt. Es ragt so weit ins Innere eines Kettengliedes hinein, dass das Widerlager und das Zugentlastungselement sich in Querrichtung des Kettengliedes zumindest teilweise überlappen. Zugentlastungselement und Widerlager sind also in Längsrichtung mit möglichst kleinem Spiel hintereinander angeordnet, sodass durch das Widerlager eine Bewegung des Zugentlastungselements in Längsrichtung unterbunden wird.

Gemäß einer vorteilhaften Ausgestaltung kann das Widerlager durch einen Quersteg gebildet sein. Unter einem Quersteg wird ein Element verstanden, das die Seitenlaschen verbindet und beabstandet zueinander fixiert.

Gemäß einer weiteren vorteilhaften Ausgestaltung kann mehr als ein Widerlager vorgesehen sein, um Kräfte aufzunehmen. Das Zugentlastungselement ist so zwischen zwei Widerlagern positioniert, dass in zwei Richtungen Kräfte aufgenommen werden können. Dies ist insbesondere dann von Vorteil, wenn wiederkehrend wechselnde Zug- und Druckkräfte zu erwarten sind.

Besonders bevorzugt ist auch die Ausgestaltung, in der das Zugentlastungselement mindestens eine Presswanne umfasst, die mit einem Ende des Zugentlastungselements verbindbar ist. Bei einer Presswanne kann es sich um ein schalen- oder halbschalenförmiges Element handeln, das dazu vorgesehen ist, eine Leitung zumindest teilweise zu umschließen und damit zu fixieren. Es kann auch eine Reihe von halbschalenförmigen Abschnitten nebeneinander angeordnet sein, sodass mehrere Leitungen durch das Zugentlastungselement führbar und in ihm fixierbar sind.

Gemäß einer weiteren vorteilhaften Ausgestaltung weist das Zugentlastungselement in seinem zweiten Endbereich eine Pressschraube auf. Diese durchdringt den zweiten Endbereich. Durch die Pressschraube kann eine Position der mindestens einen Presswanne im Zugentlastungselement eingestellt und so eine Spannung zwischen Presswanne und Leitung und Fixierung von der mindestens einen Presswanne und der mindestens einen Leitung hergestellt werden.

Gemäß einem weiteren erfinderischen Gedanken wird eine Leitungsführungseinrichtung mit einer Mehrzahl von gelenkig miteinander verbundenen Gliedern vorgestellt. Diese Leitungsführungseinrichtung ist insbesondere zum Führen von Leitungen oder Schläuchen zwischen zwei relativ zueinander beweglichen Anschlusspunkten geeignet. Mindestens ein Kettenglied ist nach den vorgehendend beschriebenen Ausführungen ausgestaltet.

An den Enden einer Leitungsführungseinrichtung sind in der Regel erhöhte Zugbelastungen zu erwarten. Daher ist die Variante einer Leitungsführungseinrichtung besonders bevorzugt, bei der mindestens ein an einem Ende der Leitungsführungseinrichtung ausgebildetes Kettenglied mit einer Zugentlastungseinheit nach den vorgehend beschriebenen Ausführungen ausgestaltet ist.

Die Erfindung sowie das technische Umfeld werden nachfolgend anhand der Figuren näher erläutert. Es ist darauf hinzuweisen, dass die Erfindung durch das gezeigte Ausführungsbeispiel nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Es ist darauf hinzuweisen, dass die Figuren und insbesondere die dargestellten Größenverhältnisse schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: eine Seitenansicht einer Seitenlasche eines erfindungsgemäßen Kettenglieds,
- Fig. 2:: eine perspektivische Ansicht eines erfindungsgemäßen Kettenglieds ohne ein integriertes Zugentlastungselements,
- Fig. 3:: eine perspektivische Ansicht eines erfindungsgemäßen Kettenglieds mit integriertem Zugentlastungselement und Leitungen,
- Fig. 4:: eine Schnittansicht eines erfindungsgemäßen Kettenglieds.

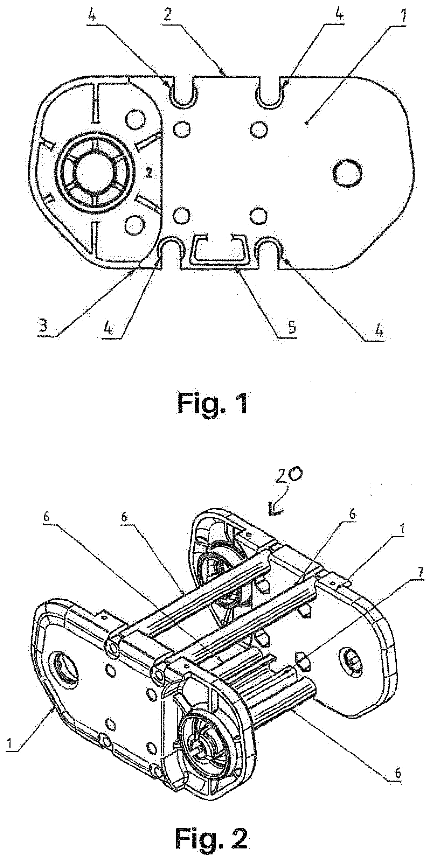

Fig. 1 zeigt in einer Seitenansicht eine Seitenlasche 1 eines erfindungsgemäßen Kettenglieds 20. Die Seitenlasche 1 weist einen ersten 2 und einen zweiten 3 Längsbereich auf. Ein Längsbereich 2, 3 erstreckt sich entlang der längsten Ausdehnung eines Seitenteils 1. Jeder Längsbereich 2, 3 weist zwei U-förmige Aussparungen 4 auf, deren Öffnung zur Außenkante des jeweiligen Längsbereichs 2, 3 hin orientiert ist. Jede Aussparung 4 weist eine Arretierungsrippe auf. Dabei handelt es sich um eine zentral in Querrichtung der Seitenlasche 1 angeordnete Querschnittsverengung in der Aussparung 4.

An dem zweiten Längsbereich 3 ist eine Vertiefung 5 vorgesehen. In diesem Ausführungsbeispiel hat diese eine Form, die zur Aufnahme eines C-Profils geeignet ist.

Fig. 2 zeigt eine perspektivische Ansicht eines erfindungsgemäßen Kettenglieds 20. Zur besseren Übersicht sind hier das Zugentlastungselement 8 und durch das Kettenglied 20 verlaufende Leitungen nicht dargestellt. Das Kettenglied 20 ist gebildet durch zwei Seitenlaschen 1, die durch vier Querstege 6 miteinander verbunden sind. Der Querschnitt eines Querstegs 6 entspricht einem geschnittenen Kreis, sodass ein Quersteg 6 in eine Aussparung 4 einführbar ist. Durch eine Drehung um 90 ° werden Querstege 6 und Seitenlaschen 1 miteinander verbunden. Ein Quersteg 6 weist einen Schlitz auf, in den eine Arretierungsrippe einer Aussparung 4 eines Seitenteils 1 eingreift, sodass die Bewegungsrichtung quer zu den Seitenteilen 1 gesperrt wird.

Ein Befestigungselement 7 ist in die Vertiefungen 5 der Seitenteile 1 am zweiten Längsrand 3 eingefügt. In diesem Ausführungsbeispiel ist das Befestigungselement 7 durch eine C-Schiene gebildet. Das Befestigungselement 7 kann auch durch Bauteile mit anderen Querschnitten, z.B. Doppel-T-Querschnitt gebildet sein.

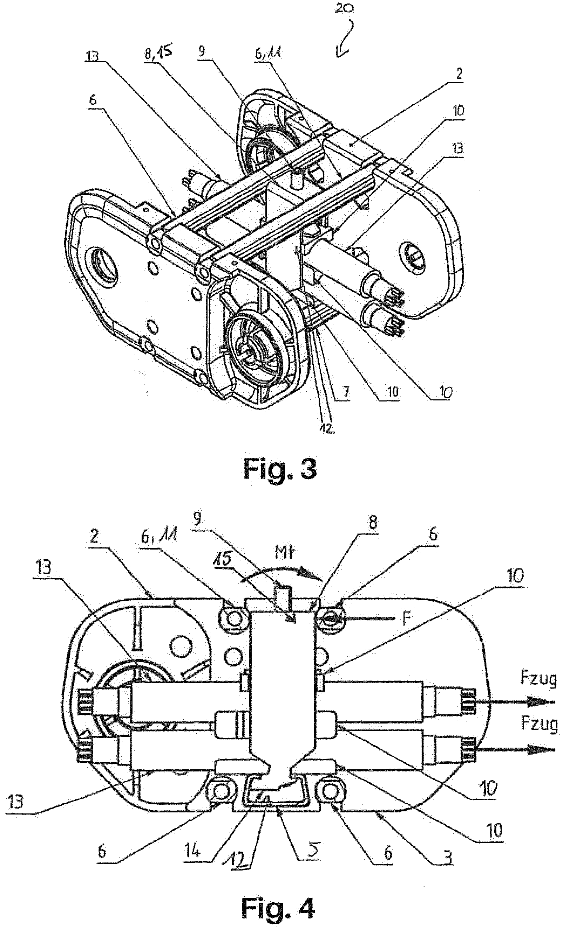

Fig. 3 zeigt die perspektivische Ansicht des erfindungsgemäßen Kettenglieds 20 aus Fig. 2 mit eingefügtem Zugentlastungselement 8 und Leitungen 13. Zugentlastungselement 8 und Befestigungselement 7 bilden eine Zugentlastungseinheit 12. Das Zugentlastungselement 8 ist mit einem ersten Endbereich 14 an dem Befestigungselement 7 integriert. Das Zugentlastungselement 8 umfasst einen Hohlkörper, durch den die Leitungen 13 geführt sind.

Das Zugentlastungelement 8 ragt vom Befestigungselement 7 mit einem zweiten Endbereich 15 bis mindestens auf Höhe eines Widerlagers 11. Es kann auch aus einer Seitenansicht betrachtet über das Kettenglied 20 hinausragen.

Zugentlastungselement 8 und Widerlager 11 sind damit so angeordnet, dass sie sich in Querrichtung des Kettengliedes 20 zumindest teilweise überlappen.

In diesem Ausführungsbeispiel bilden die Querstege 6 am ersten Längsrand 2 der Seitenteile 1 jeweils ein Widerlager 11.

Das Zugentlastungselement 8 weist mehrere Presswannen 10 auf, zwischen denen Leitungen 13 durchgeführt sind. Durch eine Pressschraube 9 können die Presswannen 10 so positioniert werden, dass sie die Leitungen 13 teilweise umschließen und damit fixieren.

Fig. 4 ist eine Schnittansicht eines erfindungsgemäßen Kettenglieds 20. In dieser Ansicht ist erkennbar, wie das Zugentlastungselement 8 mit dem Befestigungselement 7 verbunden ist. Das Zugentlastungselement 8 greift in diesem Ausführungsbeispiel in das Befestigungselement 7 ein. Der erste Endbereich 14 des Zugentlastungselements 7 ist asymmetrisch gestaltet, sodass sich das Zugentlastungselement mit geringem Montageaufwand in das Befestigungselement einfügen lässt, indem es beim Verbindungsvorgang geneigt wird. Es sind auch solche Kombinationen von Befestigungs- 7 und Zugentlastungelement 8 möglich, bei denen das Zugentlastungselement 8 um das Befestigungselement 7 herumgreift und form- und/oder kraftschlüssig verbunden wird.

In Fig. 4 sind beispielhaft auftretende Kräfte und Momente durch Pfeile dargestellt. Eine an den Leitungen 13 auftretende Zugkraft F_{Zug} verursacht ein Torsionsmoment Mₜ. Dieses greift an der Verbindungsstelle zwischen Befestigungs- 7 und Zugentlastungselement 8 an. Ein Quersteg 6 am ersten Längsrand 2 bildet ein Widerlager 11 und nimmt einen Teil der durch die Zugkraft F entstehenden Belastung auf. Dazu ist das Zugentlastungselement 8 mit möglichst geringem Spiel zwischen den beiden Querstegen 6 am ersten Längsrand 2 angeordnet, sodass eine Lageveränderung des Zugentlastungselementes 8 als Reaktion auf an den Leitungen 13 angreifende Zugkräfte unterbunden wird. Bei einem Lastwechsel, einer entgegengesetzt angreifenden Zugkraft bzw. Druckkraft, kann die Belastung durch den jeweils anderen Quersteg 6 aufgenommen werden.

Die Erfindung betrifft ein Kettenglied einer Leitungsführungseinrichtung sowie eine Leitungsführungseinrichtung. Das Kettenglied weist eine integrierte Zugentlastungseinheit auf. Durch den vorteilhaften Aufbau können Kräfte und Momente, die auf Leitungen und Leitungsführungseinrichtung wirken, aufgenommen und abgeleitet werden, sodass die Gefahr von Materialbruch reduziert und damit die Lebensdauert aller Komponenten erhöht wird. Zudem erweist sich die Erfindung als besonders montage- und wartungsfreundlich.

Unter einem Kettenglied wird im Allgemeinen ein Teilstück einer Leitungsführungseinrichtung verstanden. Dabei kann um ein separierbares Teil handeln. Gleichermaßen kann ein Kettenglied ein einzelner Abschnitt einer Aneinanderreihung mehrerer Abschnitte sein, der um mindestens eine Schwenkachse verschwenkbar ist und der dazu geeignet ist, mindestens eine Leitung aufzunehmen.

### Bezugszeichenliste

- 1: Seitenlasche
- 2: erster Längsbereich
- 3: zweiter Längsbereich
- 4: Aussparung für Quersteg
- 5: Vertiefung
- 6: Quersteg
- 7: Befestigungselement
- 8: Zugentlastungselement
- 9: Pressschraube
- 10: Presswanne
- 11: Widerlager
- 12: Zugentlastungseinheit
- 13: Leitung
- 14: erster Endbereich
- 15: zweiter Endbereich
- 20: Kettenglied

## Patentansprüche

1. Kettenglied (20) einer Leitungsführungseinrichtung zum Führen von Leitungen (13) oder Schläuchen zwischen zwei relativ zueinander beweglichen Anschlusspunkten,
wobei das Kettenglied (20) zwei parallele Seitenlaschen (1) und eine im Kettenglied (20) integrierte Zugentlastungseinheit (12) aufweist,
wobei jede Seitenlasche (1) einen ersten (2) und einen zweiten Längsrand (3) aufweist,
wobei die Zugentlastungseinheit (12) ein Befestigungselement (7), welches mit den Seitenlaschen (1) verbunden ist und wenigstens ein Zugentlastungselement (8) mit einem ersten Endbereich (14), der mit dem Befestigungselement (7) verbunden ist, und einem zweiten, dem ersten gegenüberliegenden Endbereich (15) aufweist,
wobei mindestens ein sich von einer Seitenlasche (1) in Richtung der gegenüberliegenden Seitenlasche (1) erstreckendes und zumindest teilweise das Zugentlastungselement (8) überlappendes Widerlager (11) vorgesehen ist,
**dadurch gekennzeichnet, dass**
der zweite Endbereich (15) des Zugentlastungselements (8) zwischen zwei Widerlagern (11) angeordnet ist.

2. Kettenglied (20) nach Anspruch 1, wobei ein Widerlager (11) durch einen die Seitenlaschen (1) verbindenden Quersteg (6) gebildet ist.

3. Kettenglied (20) nach Anspruch 1 oder 2, wobei das Zugentlastungselement (8) mindestens eine Presswanne (10) umfasst, die mit mindestens einem Endbereich (14, 15) verbindbar ist.

4. Kettenglied (20) nach Anspruch 3, wobei das Zugentlastungselement (8) in seinem zweiten Endbereich (15) eine sich in Richtung der mindestens einen Presswanne (10) erstreckende den zweiten Endbereich (15) durchdringende Pressschraube (9) aufweist.

5. Leitungsführungseinrichtung zum Führen von Leitungen (13) oder Schläuchen zwischen zwei relativ zueinander beweglichen Anschlusspunkten, umfassend gelenkig miteinander verbundene Kettenglieder (20), wobei wenigstens ein Kettenglied (20) zwei parallele Seitenlaschen (1) und eine im Kettenglied (20) integrierte Zugentlastungseinheit (12) aufweist,
wobei jede Seitenlasche (1) einen ersten (2) und einen zweiten Längsrand (3) aufweist,
wobei die Zugentlastungseinheit (12) ein Befestigungselement (7), welches mit den Seitenlaschen (1) verbunden ist und wenigstens ein Zugentlastungselement (8) mit einem ersten Endbereich (14), der mit dem Befestigungselement (7) verbunden ist, und einem zweiten, dem ersten gegenüberliegenden Endbereich (15) aufweist,
wobei mindestens ein sich von einer Seitenlasche (1) in Richtung der gegenüberliegenden Seitenlasche (1) erstreckendes und zumindest teilweise das Zugentlastungselement (8) überlappendes Widerlager (11) vorgesehen ist,
**dadurch gekennzeichnet, dass**
der zweite Endbereich (15) des Zugentlastungselements (8) zwischen zwei Widerlagern (11) angeordnet ist..

6. Leitungsführungseinrichtung, umfassend eine Mehrzahl von Kettengliedern (20), wobei mindestens ein Kettenglied (20) nach einem der Ansprüche 2 bis 4 ausgebildet ist.

7. Leitungsführungseinrichtung nach Anspruch 5 oder 6, wobei mindestens ein an einem Ende der Leitungsführungseinrichtung ausgebildetes Kettenglied (20) nach einem der Ansprüche 1 bis 4 ausgebildet ist.

## Claims

1. Chain link (20) of a line guiding device for guiding lines (13) or hoses between two connection locations which can be moved relative to each other,
wherein the chain link (20) has two parallel side flaps (1) and a strain relief unit (12) which is integrated in the chain link (20),
wherein each side flap (1) has a first longitudinal edge (2) and a second longitudinal edge (3),
wherein the strain relief unit (12) has a securing element (7) which is connected to the side flaps (1) and at least one strain relief element (8) having a first end region (14) which is connected to the securing element (7) and a second end region (15) opposite the first,
wherein at least one abutment (11) which extends from a side flap (1) in the direction of the opposing side flap (1) and which at least partially overlaps the strain relief element (8) is provided,
**characterized in that**
the second end region (15) of the strain relief element (8) is arranged between two abutments (11).

2. Chain link (20) according to Claim 1, wherein an abutment (11) is formed by means of a transverse web (6) which connects the side flaps (1).

3. Chain link (20) according to Claim 1 or 2, wherein the strain relief element (8) comprises at least one press trough (10) which can be connected to at least one end region (14, 15).

4. Chain link (20) according to Claim 3, wherein the strain relief element (8) has in the second end region (15) thereof a press screw (9) which extends in the direction of the at least one press trough (10) and which extends through the second end region (15).

5. Line guiding device for guiding lines (13) or hoses between two connection locations which can be moved relative to each other, comprising chain links (20) which are connected to each other in an articulated manner, wherein at least one chain link (20) has two parallel side flaps (1) and a strain relief unit (12) which is integrated in the chain link (20),
wherein each side flap (1) has a first longitudinal edge (2) and a second longitudinaledge (3),
wherein the strain relief unit (12) has a securing element (7) which is connected to the side flaps (1) and at least one strain relief element (8) having a first end region (14) which is connected to the securing element (7) and a second end region (15) opposite the first,
wherein at least one abutment (11) which extends from a side flap (1) in the direction of the opposing side flap (1) and which at least partially overlaps the strain relief element (8) is provided,
**characterized in that**
the second end region (15) of the strain relief element (8) is arranged between two abutments (11).

6. Line guiding device comprising a plurality of chain links (20), wherein at least one chain link (20) is configured according to one of Claims 2 to 4.

7. Line guiding device according to Claim 5 or 6, wherein at least one chain link (20) which is formed at an end of the line guiding device is configured according to one of Claims 1 to 4.

## Revendications

1. Maillon de chaîne (20) d'un dispositif de guidage de câbles pour le guidage de câbles (13) ou de tuyaux entre deux points de raccordement mobiles l'un par rapport à l'autre,
le maillon de chaîne (20) présentant deux pattes latérales (1) parallèles et une unité de réduction de tension (12) intégrée dans le maillon de chaîne (20),
chaque patte latérale (1) présentant un premier (2) et un deuxième (3) bord longitudinal,
l'unité de réduction de tension (12) présentant un élément de fixation (7), qui est relié aux pattes latérales (1) et au moins un élément de réduction de tension (8) présentant une première zone d'extrémité (14), qui reliée à l'élément de fixation (7), et une deuxième zone d'extrémité (15) opposée à la première,
au moins une butée (11) s'étendant à partir d'une patte latérale (1) en direction de la patte latérale (1) opposée et chevauchant au moins partiellement l'élément de réduction de tension (8) étant prévue,
**caractérisé en ce que**
la deuxième zone d'extrémité (15) de l'élément de réduction de tension (8) est agencée entre deux butées (11).

2. Maillon de chaîne (20) selon la revendication 1, une butée (11) étant formée par une traverse (6) reliant les pattes latérales (1).

3. Maillon de chaîne (20) selon la revendication 1 ou 2, l'élément de réduction de tension (8) comprenant au moins une auge de pressage (10) qui peut être reliée à au moins une zone d'extrémité (14, 15).

4. Maillon de chaîne (20) selon la revendication 3, l'élément de réduction de tension (8) présentant, dans sa deuxième zone d'extrémité (15), une vis de pressage (9) s'étendant en direction de ladite au moins une auge de pressage (10) et traversant la deuxième zone d'extrémité (15).

5. Dispositif de guidage de câbles pour le guidage de câbles (13) ou de tuyaux entre deux points de raccordement mobiles l'un par rapport à l'autre, comprenant des maillons de chaîne (20) reliés de manière articulée les uns aux autres, au moins un maillon de chaîne (20) présentant deux pattes latérales (1) parallèles et unité de réduction de tension (12) intégrée dans le maillon de chaîne (20),
chaque patte latérale (1) présentant un premier (2) et un deuxième (3) bord longitudinal,
l'unité de réduction de tension (12) présentant un élément de fixation (7), qui est relié aux pattes latérales (1) et au moins un élément de réduction de tension (8) présentant une première zone d'extrémité (14), qui reliée à l'élément de fixation (7), et une deuxième zone d'extrémité (15) opposée à la première,
au moins une butée (11) s'étendant à partir d'une patte latérale (1) en direction de la patte latérale (1) opposée et chevauchant au moins partiellement l'élément de réduction de tension (8) étant prévue,
**caractérisé en ce que**
la deuxième zone d'extrémité (15) de l'élément de réduction de tension (8) est agencée entre deux butées (11).

6. Dispositif de guidage de câbles, comprenant une multitude de maillons de chaîne (20), au moins un maillon de chaîne (20) étant réalisé selon l'une des revendications 2 à 4.

7. Dispositif de guidage de câbles selon la revendication 5 ou 6, au moins un maillon de chaîne (20) réalisé en une extrémité du dispositif de guidage de câbles étant réalisé selon l'une des revendications 1 à 4.
